# EUROPÄISCHE PATENTSCHRIFT

(11) **EP 1 260 406 B1**
(45) Veröffentlichungstag und Bekanntmachung des Hinweises auf die Patenterteilung: **18.07.2007**
(21) Anmeldenummer: 02008478.6
(22) Anmeldetag: 15.04.2002
(51) Int. Cl.: B60N 2/36, B60R 5/04

(54) **Sitzanordnung für einen Fahrzeuginnenraum**
Seat arrangement for the interior of a vehicle
Agencement de sièges pour un habitacle de véhicule

(30) Priorität: 18.05.2001 DE 10125727
(43) Veröffentlichungstag der Anmeldung: 27.11.2002
(73) Patentinhaber: BOS GmbH & Co. KG, 73760 Ostfildern (DE); Bayerische Motoren Werke Aktiengesellschaft, 80809 München (DE)
(72) Erfinder: Seel, Holger, 71134 Aidlingen (DE); Sparrer, Henning, 73274 Notzingen (DE); Tobisch, Franz, 81541 München (DE)
(74) Vertreter: Patentanwälte Ruff, Wilhelm, Beier, Dauster & Partner

(56) Entgegenhaltungen:
- EP-A- 0 857 614
- DE-A- 3 729 837
- DE-A- 19 933 510
- FR-A- 2 710 595
- FR-A- 2 752 785
- US-A- 4 848 826

## Beschreibung

Die Erfindung betrifft eine Sitzanordnung für einen Fahrzeuginnenraum mit wenigstens einer Rückenlehne, die zu einer Heckwand benachbart ist, wobei wenigstens die Rückenlehne relativ zu der Heckwand verstellbar ist.

Es ist bei Personenkraftwagen der Ober- und Luxusklasse allgemein bekannt, eine Sitzanordnung im Bereich eines Fondraumes verstellbar zu gestalten. Dabei ist die Rückenlehne der Sitzanordnung in ihrem oberen Bereich an einer Rückwand des Fahrzeuginnenraumes angelenkt, so dass eine Vorverlagerung des Sitzkissenteiles zwangsläufig auch eine vergrößerte Schrägstellung, d. h. Neigung der Rückenlehne zur Folge hat.

Aus der FR 2752785 A1 ist eine Sitzanordnung für einen Fahrzeuginnenraum bekannt, bei der mehrere nebeneinander angeordnete Einzelsitze in Fahrzeuglängsrichtung verstellbar sind. Um je nach Verstellung der Einzelsitze einen Spalt zu einer heckseitigen Abdeckung überdecken zu können, ist eine Blendenanordnung vorgesehen, die mehrere parallel nebeneinander und in Fahrzeuglängsrichtung ausgerichtete Lamellen aufweist. Die Lamellen sind ineinandergreifend formsteif zueinander positioniert und bilden ein gemeinsames Lamellenpaket. Dieses Lamellenpaket ist schubladenartig aus der heckseitigen Abdeckung ausziehbar oder in diese einschiebbar.

Die DE 19933510 A1 offenbart zur Überdeckung des Spaltes zwischen einer formstabilen Hutablage und einem in Fahrzeuglängsrichtung verstellbaren Fahrzeugsitz eine Blendenanordnung, die ein biegeschlaffes Dekormaterial umfasst. In nach vorne verschobener Endstellung ist dieses Dekormaterial in einer gestrafften Position, in der hinteren Endposition des Fahrzeugsitzes hängt es schlaufenartig durch.

Aus der EP 0857614 A2 ist eine zu einem Fondsitz gewandte, balgartige Kofferraumerweiterung vorgesehen, die in einem Durchtrittsbereich einer Rückwand zwischen Fahrgastraum und Kofferraum vorgesehen ist.

Die FR 2710595 A1 offenbart eine weitere Kofferraumerweiterung, die nach Art eines Zeltes aufspannbar ist.

Aus der DE 3729837 A1 ist eine teleskopierbare Kofferraumerweiterung bekannt, die sich in einem Freiraum zu Vordersitzen des Fahrgastraumes erstrecken kann.

Aufgabe der Erfindung ist es, eine Sitzanordnung der eingangs genannten Art zu schaffen, die eine gegenüber dem Stand der Technik verbesserte Verstellbarkeit gewährleistet.

Diese Aufgabe wird dadurch gelöst, dass wenigstens eine Blendenanordnung vorgesehen ist, die an der Rückenlehne einerseits und der Heckwand andererseits festgelegt ist, und die flexibel gestaltet ist, um Bewegungen der Rückenlehne in Fahrzeuglängsrichtung folgen zu können, und die eigensteif gestaltet ist, um ihre Form während der Bewegungen der Rückenlehne zumindest weitgehend beizubehalten, und dass die Blendenanordnung mehrere, über wenigstens ein flexibles Koppelglied parallel aneinandergefügte, formstabile Lamellen aufweist, die in Fahrzeugquerrichtung erstreckt sind. Durch die erfindungsgemäße Lösung ist keine Anlenkung der Rückenlehne an der Heckwand mehr notwendig, wie dies beim Stand der Technik der Fall ist. Vielmehr ist eine äußerst variable Verstellbarkeit der Sitzanordnung gewährleistet, indem die Sitzanordnung in Fahrzeuglängsrichtung und in Fahrzeughochrichtung verstellbar ist und darüber hinaus die Rückenlehne in ihrer Neigung verstellt werden kann, da die Sitzanordnung keine Anbindung mehr zur Heckwand aufweist. Die Blendenanordnung gewährleistet, dass der zwischen der Rückenlehne und der Heckwand je nach Verstellung der Sitzanordnung vorhandene Spalt oder Zwischenraum in jedem Fall überdeckt ist. Dadurch kann der Spalt oder Zwischenraum zwischen Heckwand und Rückenlehne verschmutzungsfrei gehalten werden. Durch die eigensteife Gestaltung der Blendenanordnung ergibt sich ein optisch ansprechender und hochwertiger Eindruck, der darüber hinaus auch Ablagemöglichkeiten, beispielsweise in Verlängerung einer Hutablage nach vorne, bieten kann. Durch die flexible Gestaltung der Blendenanordnung kann diese der Bewegung der Rückenlehne und der Sitzanordnung folgen. Die Sitzanordnung kann aus einem oder mehreren Einzelsitzen oder auch aus einer Sitzbank gebildet sein. Besonders bevorzugt ist die erfindungsgemäße Sitzanordnung in einem Fondbereich eines Innenraumes eines Personenkraftwagens vorgesehen. Die parallel aneinander gefügten, formstabilen Lamellen erstrecken sich bei einer Positionierung der Sitzanordnung in einem Fondbereich eines Personenkraftwagens in Fahrzeugquerrichtung, und sie sind horizontal ausgerichtet. Die flexiblen Koppelglieder können durch Scharniere mit formstabilen Scharnierelementen oder auch durch elastische Scharnieranordnungen gebildet sein.

In Ausgestaltung der Erfindung ist die Blendenanordnung an einer Seite mit einem formstabilen Passteil verbunden, das heckwand- oder sitzfest montierbar ist. Hierdurch ist eine einfache und lösbare Montierbarkeit ermöglicht. Mittels des Passteiles ist eine Vormontage der Blendenanordnung möglich, so dass mit relativ geringem Montageaufwand die Positionierung der Blendenanordnung an der Sitzanordnung und an der Heckwand erzielbar ist.

In weiterer Ausgestaltung der Erfindung ist die Blendenanordnung gewölbt zwischen der Heckwand und der Rückenlehne montiert. Durch die vorzugsweise nach oben oder nach unten gewölbte Ausrichtung der Blendenanordnung ist ein definiertes Auswölben oder Ausknicken der Blendenanordnung bei einer Verstellung der Sitzanordnung gewährleistet. Durch die Wölbung ist die gewünschte Ausweichrichtung der Blendenanordnung bei einem Zusammendrücken bereits vorgegeben. Die Längserstreckung der Blendenanordnung - auf die Spalt- oder Zwischenraumbreite bezogen - ist so gewählt, dass die Blendenanordnung auch bei einer Verstellung der Sitzanordnung in die äußerste Endposition nicht gestreckt ist, so dass die Blendenanordnung keiner Zugbelastung ausgesetzt ist, so dass auch auf die Sitzanordnung keine Rückhaltekräfte aufgrund der Montage der Blendenanordnung wirken.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt schematisch in einer Schnittdarstellung eine Ausführungsform einer erfindungsgemäßen Sitzanordnung in einem Fondbereich eines Personenkraftwagens,
- Fig. 2: in vergrößerter, perspektivischer Darstellung eine Blendenanordnung für die Sitzanordnung nach Fig. 1 und
- Fig. 3: eine weitere perspektivische Darstellung der Blendenanordnung nach Fig. 2 von der gegenüberliegenden Seite.

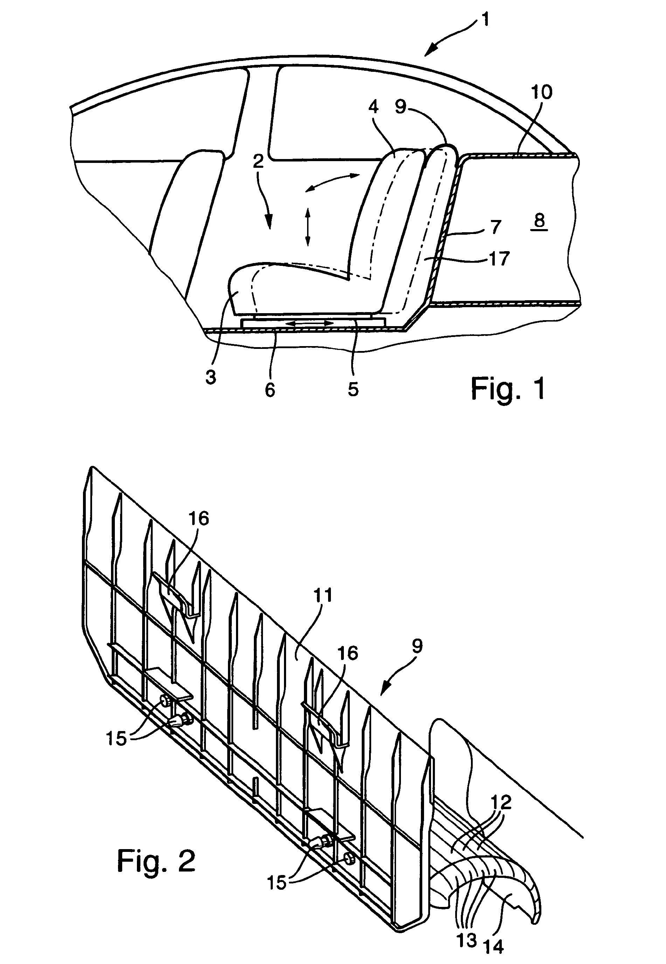

Ein Personenkraftwagen 1 weist gemäß Fig. 1 einen Fahrzeuginnenraum auf, der mit einem Frontbereich sowie mit einem Fondbereich 2 versehen ist. In dem Fondbereich 2 ist eine Sitzanordnung 3, 4 vorgesehen, die sich beim dargestellten Ausführungsbeispiel aus zwei nebeneinander angeordneten Einzelsitzen zusammensetzt, wobei jeder Einzelsitz ein Sitzteil 3 und eine Rückenlehne 4 aufweist. Jeder Einzelsitz 3, 4 ist analog zu einem Fahrer- oder Beifahrersitz sowohl in Fahrzeuglängsrichtung als auch in Fahrzeughochrichtung verstellbar gelagert (siehe Pfeildarstellungen). Zusätzlich ist die Rückenlehne 4 zwischen einer steilen Stellung und einer flachen Stellung stufenlos in ihrer Neigung verstellbar. Zur Lagerung und Verstellung jedes Einzelsitzes ist eine Führungs- und Stelleinheit 5, 6 vorgesehen, die in Fig. 1 lediglich schematisch angedeutet ist, vom grundsätzlichen Aufbau her jedoch einer Führungs- und Stelleinheit für einen Fahrer- oder Beifahrersitz entspricht.

In Abstand hinter den Rückenlehnen 4 der Einzelsitze ist eine Heckwand 7 der Fahrzeugkarosserie vorgesehen, die gleichzeitig die frontseitige Begrenzung eines Koffer- oder Laderaumes 8 darstellt. Der Koffer- oder Laderaum 8 ist nach oben durch ein horizontales Karosserieteil 10 begrenzt, das allgemein als Hutablage bezeichnet ist. Zwischen der Rückseite der Rückenlehne 4 und der Heckwand 7 befindet sich ein Zwischenraum, der in seiner Breite je nach der Stellung jedes Einzelsitzes 3, 4 variabel ist. Der Zwischenraum 17 ist nach oben zwischen der Oberseite der Rückenlehne 4 und der Hutablage 10 offen, wobei zum Verschließen dieses offenen Bereiches eine Blendenanordnung 9 vorgesehen ist. Beim dargestellten Ausführungsbeispiel ist jeweils eine Blendenanordnung für jeden Einzelsitz 3, 4 vorgesehen, die sich über die gesamte Länge des jeweiligen Zwischenraumes 17 - in Fahrzeugquerrichtung gesehen - erstreckt und somit den jeweiligen Zwischenraum 17 vollständig überdeckt. An den gegenüberliegenden Stirnseiten schließt jede Blendenanordnung 9 mit Innenraumverkleidungsteilen ab, wobei in der Fahrzeugmitte als Innenraumverkleidungsteil eine Sitzkonsole vorgesehen ist, die die beiden Einzelsitze 3, 4 voneinander trennt.

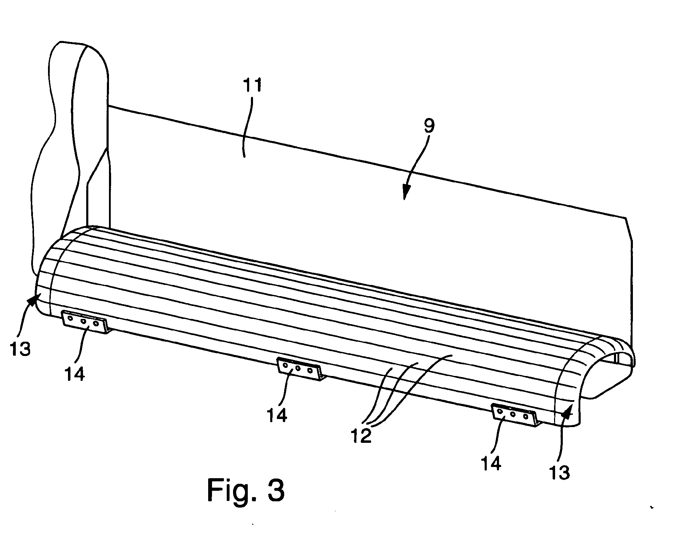

Wie anhand der Fig. 2 und 3 gut erkennbar ist, ist die Blendenanordnung 9 aus einer Vielzahl von parallel zueinander in Fahrzeugquerrichtung und horizontal ausgerichteten, formstabilen Lamellen 12 zusammengesetzt, die über flexible Koppelglieder 13 miteinander verbunden sind. Als flexible Koppelglieder für die Lamellen 12 sind beim dargestellten Ausführungsbeispiel seitlich elastische Gliederraupen 13 vorgesehen, die mit den Stirnseiten der Lamellen 12 fest verbunden sind. Zusätzlich oder alternativ können die Lamellen 12 an ihrer Unter- und/oder Oberseite mit einer flexiblen Decklage in Form eines Gewebes oder ähnlichem fest verbunden sein, die zum einen die dichte Verbindung zwischen den Lamellen gewährleistet und zum anderen alternativ oder ergänzend als Koppelglied dienen kann.

Die Blendenanordnung 9 ist derart gestaltet, dass sie im montierten Zustand zwangsläufig in einen nach oben gewölbten Zustand gemäß den Fig. 1 bis 3 gedrückt ist. Die Koppelglieder 13 sind derart belastet untereinander verbunden, dass sie im montierten Zustand zwangsläufig auf die Lamellen 12 die Wölbungsbelastung nach oben ausüben und zwar unabhängig davon, in welcher Stellposition der jeweilige Einzelsitz 3, 4 sich befindet. Die in Fahrzeuglängsrichtung gesehene, gestreckte Länge der Blendenanordnung 9 ist größer als der maximale Abstand in Fahrzeuglängsrichtung zwischen der Rückseite der Rückenlehne 4 und der Heckwand 7, so dass auch in maximal nach vorne verfahrener Endposition des Einzelsitzes 3, 4 sich die Blendenanordnung 9 noch in einer nach oben gewölbten Position befindet. Dadurch ist gewährleistet, dass die Blendenanordnung 9 sich bei einer Rückverschiebung des Einzelsitzes 3, 4 definiert ausschließlich nach oben auswölbt, so dass Falten- oder Wellenbildungen vermieden werden.

Die Blendenanordnung 9 ist sowohl mit der Rückseite der Rückenlehne 4 als auch mit der Heckwand 7 lösbar verbunden. Zur Verbindung mit der Heckwand 7 ist ein formstabiles Passteil 11 vorgesehen, das mit Steckführungen 16 versehen ist, die in korrespondierende Aufnahmen in der Heckwand 7 im montierten Zustand zusammenwirken. Zudem weist das plattenförmige Passteil 11 Befestigungsmittel 15 auf, mittels derer die zugeordnete Längsseite der Blendenanordnung 9 lösbar mit dem Passteil 11 verbindbar ist. Auch die gegenüberliegende Längsseite der Blendenanordnung 9 ist mit Befestigungsmitteln 14 versehen, die lösbar mit der Rückseite der Rückenlehne 4 verbindbar sind. Sowohl das Passteil 11 als auch die Lamellen 12 sind vorzugsweise aus Kunststoff hergestellt. Die Koppelglieder 13 können vorzugsweise aus einem Elastomer wie beispielsweise Kautschuk hergestellt sein.

## Patentansprüche

1. Sitzanordnung für einen Fahrzeuginnenraum mit wenigstens einer Rückenlehne, die zu einer Heckwand (7) benachbart ist, wobei wenigstens die Rückenlehne relativ zu der Heckwand (7) verstellbar ist,
**dadurch gekennzeichnet, dass**
wenigstens eine Blendenanordnung (9) vorgesehen ist, die an der Rückenlehne (4) einerseits und der Heckwand (7) andererseits festgelegt ist, und die flexibel gestaltet ist, um Bewegungen der Rückenlehne (4) in Fahrzeuglängsrichtung folgen zu können, und die eigensteif gestaltet ist, um ihre Form während der Bewegungen der Rückenlehne zumindest weitgehend beizubehalten, und dass die Blendenanordnung (9) mehrere, über wenigstens ein flexibles Koppelglied (13) parallel aneinandergefügte, formstabile Lamellen (12) aufweist, die in Fahrzeugquerrichtung erstreckt sind.

2. Sitzanordnung nach Anspruch 1, **dadurch gekennzeichnet, dass** mehrere Koppelglieder (13) derart belastet untereinander verbunden sind, dass sie im montierten Zustand zwangsläufig auf die Lamellen (12) eine Wölbungsbelastung nach oben ausüben unabhängig davon, in welcher Stellposition die Rückenlehne (4) sich befindet.

3. Sitzanordnung nach Anspruch 2, **dadurch gekennzeichnet, dass** eine in Fahrzeuglängsrichtung gesehene, gestreckte Länge der Blendenanordnung (9) größer ist als der maximale Abstand in Fahrzeuglängsrichtung zwischen der Rückseite der in nach vorne verfahrener Endposition befindlicher Rückenlehne (4) und der Heckwand (7).

4. Sitzanordnung nach Anspruch 1, **dadurch gekennzeichnet, dass** die Blendanordnung (9) an wenigstens einer Seite mit einem formstabilen Passteil (11) verbunden ist, das heckwand- oder sitzfest montierbar ist.

5. Sitzanordnung nach Anspruch 1, **dadurch gekennzeichnet, dass** die Blendenanordnung (9) gewölbt zwischen der Heckwand (7) und der Rückenlehne (4) montiert ist.

## Claims

1. Seat arrangement for an interior of a vehicle with at least one backrest which is adjacent to a rear wall (7), wherein at least the backrest can be adjusted relative to the rear wall (7),
**characterised in that**
at least one screen arrangement (9) is provided, which arrangement is secured on the one hand to the backrest (4) and on the other to the rear wall (7), and is flexible in order to be able to follow movements of the backrest (4) in the longitudinal direction of the vehicle, and is intrinsically rigid in order to at least largely retain its shape during the movements of the backrest, and that the screen arrangement (9) has a plurality of dimensionally stable slats (12) which are joined together in parallel via at least one flexible coupling member (13) and are extended in the transverse direction of the vehicle.

2. Seat arrangement according to Claim 1, **characterised in that** a plurality of coupling members (13) are connected together in a loaded fashion such that they automatically exert a curving load upwards on the slats (12) in the assembled state, irrespective of the set position of the backrest (4).

3. Seat arrangement according to Claim 2, **characterised in that** a flat length of the screen arrangement (9), viewed in the longitudinal direction of the vehicle, is greater than the maximum distance in the longitudinal direction of the vehicle between the back of the backrest (4) located in the forward end position and the rear wall (7).

4. Seat arrangement according to Claim 1, **characterised in that** the screen arrangement (9) is connected at least at one point to a dimensionally stable adapter (11) which can be mounted rigid with the rear wall or the seat.

5. Seat arrangement according to Claim 1, **characterised in that** the screen arrangement (9) is mounted curved between the rear wall (7) and the backrest (4).

## Revendications

1. Agencement de siège dans un habitacle intérieur de véhicule, comprenant au moins un dossier voisin d'une paroi arrière (7), l'au moins un dossier étant réglable par rapport à la paroi arrière (7), **caractérisé en ce qu'**il est prévu au moins un agencement d'occultation (9) fixé au dossier (4) d'une part et à la paroi arrière (7) d'autre part, qui a une configuration flexible en vue de pouvoir suivre des mouvements du dossier (4) dans la direction longitudinale du véhicule, et qui est conçu avec une rigidité intrinsèque en vue de conserver, au moins en grande partie, sa forme pendant les mouvements du dossier, et **en ce que** l'agencement d'occultation (9) présente plusieurs lamelles (12) de forme stable, qui s'étendent dans la direction transversale du véhicule et sont adjointes parallèlement les unes aux autres par l'intermédiaire d'au moins un organe de couplage (13) flexible.

2. Agencement de siège selon la revendication 1, **caractérisé en ce que** plusieurs organes de couplage (13) sont reliés entre eux en étant sollicités de telle manière que, dans l'état montés, ils exercent forcément sur les lamelles (12) une sollicitation de mise en forme bombée vers le haut, indépendamment de la position de réglage dans laquelle se trouve le dossier (4).

3. Agencement de siège selon la revendication 2, **caractérisé en ce qu'**une longueur en position étendue de l'agencement d'occultation (9), considérée dans la direction longitudinale du véhicule, est plus grande que la distance d'espacement maximale, dans la direction longitudinale du véhicule, entre le côté arrière du dossier (4) se trouvant dans la position extrême de déplacement vers l'avant, et la paroi arrière (7).

4. Agencement de siège selon la revendication 1, **caractérisé en ce que** l'agencement d'occultation (9) est relié, sur au moins un côté, à une pièce d'ajustement (11) de forme stable, qui peut être montée de manière fixe sur la paroi arrière ou sur le siège.

5. Agencement de siège selon la revendication 1, **caractérisé en ce que** l'agencement d'occultation (9) est monté de manière bombée entre la paroi arrière (7) et le dossier (4).
